# EUROPÄISCHE PATENTSCHRIFT

(11) **EP 0 445 252 B1**
(45) Veröffentlichungstag und Bekanntmachung des Hinweises auf die Patenterteilung: **12.01.1994**
(21) Anmeldenummer: 90914049.3
(22) Anmeldetag: 28.09.1990
(51) Int. Cl.: H02H 3/33, H02H 7/00, H02H 3/44

(54) **VORRICHTUNG ZUM SCHUTZ EINER LEUCHTRÖHRENANLAGE**
DEVICE FOR PROTECTING A FLUORESCENT TUBE INSTALLATION
DISPOSITIF DE PROTECTION D'INSTALLATIONS DE LAMPES TUBES

(30) Priorität: 28.09.1989 CH 3502/89
(43) Veröffentlichungstag der Anmeldung: 11.09.1991
(73) Patentinhaber: AMTECA AG, CH-8330 Pfäffikon (CH)
(72) Erfinder: HUG, Alfred, CH-8122 Binz (CH)
(74) Vertreter: Lauer, Joachim, Dr.
(86) Internationale Anmeldenummer: CH9000231
(87) Internationale Veröffentlichungsnummer: WO9105393

(56) Entgegenhaltungen:
- EP-A- 0 095 590
- DE-B- 1 033 329
- FR-A- 2 520 165
- IEEE SPECTRUM Vol. 9, No. 2, Feb 1972, New York US; pages 41-50; C.F. Dalziel: " Electric shock hazard "

## Beschreibung

### Technisches Gebiet

Die vorliegende Erfindung betrifft eine Vorrichtung zum Schutz einer Leuchtröhrenanlage gemäss dem Oberbegriff des Patentanspruchs 1.

Für den Betrieb von Hochspannungsleuchtröhren, insbesondere solchen für Leuchtschriften oder Signalanlagen, sind besondere Transformatoren - genannt Neontransformatoren - nötig, die sowohl die erforderliche Hochspannung zur Zündung der Leuchtröhren erzeugen, als auch die für deren Dauerbetrieb erforderliche Brennspannung abgeben. Sie sind in der Regel als Streufeldtransformatoren ausgeführt und müssen nach einschlägigen Vorschriften leerlauf- und kurzschlussfest sein. Weiter muss die Hochspannungswicklung dieser Transformatoren mit einer Mittelanzapfung versehen sein, die geerdet sein muss, damit das Potential der Hochspannungswicklung festgelegt ist und eindeutige Spannungsverhältnisse herrschen.

Bei Entladungsröhren, insbesondere solchen, die in brennbares Material eingebaut sind, besteht Brandgefahr, wenn infolge eines Erdschlusses des Transformators ein direkter oder schleichender Kurzschluss entsteht und es zu Funkenbildung durch eine Lichtbogen- oder Glimmentladung oder zu starker Erwärmung kommt. Ausserdem kann beim Zerbrechen einer Entladungsröhre im Betrieb ebenfalls ein Lichtbogen entstehen oder es können spannungsführende Teile berührbar werden.

Aus Sicherheitsgründen drängt sich daher ein Schutz solcher Leuchtröhrenanlagen auf. Der Schutz müsste sowohl bei Erdschluss, bei Kurzschluss als auch im Leerlauffall die Anlage abschalten.

### Stand der Technik

Es sind bereits Schutzvorrichtungen bekannt geworden, welche jedoch lediglich in der Lage sind, einen Erdschluss, nicht jedoch einen Kurzschluss oder Leerlauf zu erkennen. Bei diesen wird die Mittelanzapfung des Transformators über einen Widerstand gegen Erde geschaltet und der Spannungsabfall über diesen Widerstand überwacht. Andererseits sind auch schon Schutzvorrichtungen bekannt geworden, die Leerlauf mit zu erfassen gestatten. Diese beruhen jedoch auf der Verwendung spezieller Transformatoren mit zwei separaten Hochspannungs wicklungen. Diese werden jeweils über einen Widerstand gegen Erde geschaltet und es wird der Spannungsabfall an diesen Widerständen überwacht und ausgewertet. Nachteilig an dieser Lösung ist vor allem die Tatsache, dass bestehende Anlagen, welche über einen wie vorstehend beschriebenen speziellen Transformator nicht verfügen, nicht ohne weiteres mit dem bekannten Schutz nachgerüstet werden können. Weiter sind bei dieser Lösung die beiden Widerstände seriell in den Stromkreis geschaltet. Bei Defekt eines der beiden Widerstände oder wenn die Installation eines der beiden Widerstände vergessen oder fehlerhaft ausgeführt wurde, kann in der für die Auswertung der Spannungsabfälle an den Widerständen erforderlichen elektronischen Schaltung Hochspannung auftreten. Schliesslich muss die Grösse der verwendeten Widerstände an das Leistungsniveau der jeweiligen Anlage angepasst werden. Im der Praxis derzeit gebräuchlich sind Anlagen mit Nennströmen zwischen 18 und 100 mA.

Eine ähnliche Schutzvorrichtung, welche bei Leerlauf bzw. Erdschluß über Hilfswicklungen des Hochspannungstransformators und bei Überstrom bzw. Kurzschluß über einen niederspannungsseitigen thermischen Auslöser zur Abschaltung führt, ist auch aus DE-B-1033329 bekannt geworden.

### Darstellung der Erfindung

Es ist Aufgabe der vorliegenden Erfindung, eine Schutzvorrichtung für Leuchtröhrenanlagen anzugeben, welche die Detektion sowohl eines Erdschlusses, eines Kurzschlusses als auch eines Leerlaufs der Anlage erlaubt, welche ohne Veränderungen an bestehenden Leuchtröhrenanlagen ohne spezielle Transformatoren mit zwei getrennten Hochspannungswicklungen in einfacher Weise nachrüstbar ist, in welcher unter keinen Umständen Hochspannung auftreten kann und bei welcher darüberhinaus, zumindest im oben angegebenen Rahmen der üblichen Nennströme, keine spezielle Anpassung an die jeweilige Anlage erforderlich ist.

Diese Aufgabe wird gemäss der vorliegenden Erfindung gelöst durch eine Vorrichtung mit den Merkmalen des Patentanspruchs 1. Vorteilhafte und daher bevorzugte Ausgestaltungen der Erfindung sind in den abhängigen Ansprüchen gekennzeichnet.

Gemäss der vorliegenden Erfindung werden demnach zur Ableitung der für die Fehlerdetektion erforderlichen Signale Ringkernwandler verwendet und zwar derart, dass die vom Hochspannungstranformator zu den Leuchtröhren führenden Hochspannungsleitungen als Primärwicklungen mitsamt ihrer Isolierung und in der Regel zusätzlich noch vorhandenen Abschirmung durch die Kerne dieser Ringkernwandler geführt sind.

Dass die Verwendung von Ringkernwandlern in der durch die vorliegende Erfindung aufgezeigten Art für den vorliegenden Einsatzzweck überhaupt möglich ist, ist sehr überraschend. Zwar ist die Verwendung von Ringkernwandlern zur Gewinnung von Stromsignalen, welche zu den Strömen in den als Primärwicklung durch ihre Kerne geführten Stromleitungen proportional sind im Schutz von Starkstromanlagen an sich schon lange bekannt. Im vorliegenden Falle konnte jedoch nicht damit gerechnet werden, dass mit solchen Ringkernwandlern das angestrebte Ziel zu erreichen sein würde und zwar gleich aus mehreren Gründen: Die Stromstärken der Ströme in den durch die Ringkerne als Primärwicklungen geführten Stromleitungen liegen lediglich im mA-Bereich. Die Ströme sind durch die übliche Ausbildung der Hochspannungstransformatoren als Streufeldtransformatoren nicht sinusförmig. Für nicht sinusförmige Signale werden Ringkernwandler im allgemeinen gar nicht in Betracht gezogen. Im Umfeld der Leuchtröhrenanlage und vor allem natürlich auch in den mit den Leuchtröhren verbundenen Leitungen treten Störfrequenzen mit z.T. erheblicher Intensität auf. Die hochspannungsfeste Isolierung und die zur Verhinderung der Abstrahlung der genannten Störfrequenzen meist zusätzlich vorhandene Abschirmung dieser Leitungen lassen zudem keine ausreichende Kopplung zwischen Primär- und Sekundärseite der Ringkernwandler erwarten. Die vorliegende Erfindung zeigt jedoch, dass die im Sekundärkreis der Ringkernwandler erhaltenen Signale durchaus, ggf. nach geeigneter Filterung und Verstärkung, für die gewünschten Schutzwecke mit Erfolg auswertbar sind.

### Kurze Beschreibung der Zeichnung

Nachstehend wird die Erfindung anhand eines Ausführungsbeipiels näher erläutert, wobei auf die beigefügten Zeichnungen Bezug genommen wird.

In der Zeichnung zeigt
- Fig. 1: ein schematisches Schaltbild einer Vorrichtung nach der Erfindung, und
- Fig. 2: ein Gehäuse zur Aufnahme der Vorrichtung nach Fig 1.

### Weg zur Ausführung der Erfindung

In der Zeichnung ist mit 1 ein Hochspannungstransformator bezeichnet, der primärseitig an ein elektrisches Wechselspannungsnetz angeschlossen ist. Der Transformator ist sekundär- ,d.h. hochspannungsseitig mittig geerdet. E bezeichnet den Erdleiter, N den Nullleiter und P den Phasenleiter des Wechselspannungsnetzes. Die Netzspannung beträgt beispielsweise 220 V. Sekundärseitig soll der Hochspannungstransformator 1 über isolierte und zusätzlich noch abgeschirmte Hochspannungsleitungen 2, 3 an selbst nicht dargestellte Hochspannungs-Leuchtröhren angeschlossen sein.

Mit 4 ist insgesamt eine Vorrichtung zum Schutz der vorbeschriebenen Leuchtröhrenanlage bezeichnet, welche die Detektion sowohl eines Erdschlusses, eines Kurzschlusses als auch eines Leerlaufs der Leuchtröhrenanlage erlaubt und in diesen Fällen den Hochspannungstransformator 1 durch Öffnen des mit 5 bezeichneten Schalters von dem ihn speisenden Wechselspannungsnetz trennt.

Die Vorrichtung 4 weist zunächst zwei Ringkernwandler 6 und 7 auf. Durch den Ringkern des Ringkernwandlers 6 ist die Hochspannungsleitung 2 als Primärwicklung mit nur einer Windung mitsamt ihrer Isolierung und Abschirmung einfach gerade durchgesteckt. Entsprechend ist die Hochspannungsleitung 3 durch den Ringkern des Ringkernwandlers 7 durchgeführt. Die Sekundärkreise der beiden Ringkernwandler sind über Tiefpassfilter 8 bzw. 9 den Eingängen von Operationsverstärkern 10 bzw. 11 zugeführt. Ausgangseitig sind den Operationsverstärken 10 und 11 jeweils Gleichrichter 12 bzw. 13 nachgeschaltet.

Die Ausgänge der Gleichrichter 12 und 13 sind auf (+)- bzw. (-)-Eingänge von Komparatoren 14 bis 17 geschaltet und zwar der Ausgang des Gleichrichters 12 auf den (-)-Eingang des Komparators 15, den (-)-Eingang des Komparators 16 und den (+)-Eingang des Komparators 17. Der Ausgang des Gleichrichters 13 ist dagegen auf den (-)-Eingang des Komparators 14, den (+)-Eingang des Komparators 16 und den (-)-Eingang des Komparators 17 geschaltet. Schliesslich liegt an den (+)-Eingängen der Komparatoren 14 und 15 noch eine erste Referenzspannung UR1 an. Es könnte sich hier jedoch auch um zwei voneinander verschiedene Referenzspannungen handeln. Eine zweite Referenzspannnung UR2 ist noch den Komparatoren 16 und 17 zugeführt.

Die logischen Ausgänge der Komparatoren sind auf eine Logik 19 geführt, welche diese im wesentlichen im Sinne einer Oder-Verknüpfung verknüpft und welche ausgangsseitig ein Relais 20 steuert, welches letztlich den Schalter 5 bedient.

Gespeist werden sämtliche vorbeschriebenen Komponenten, sofern sie eine Speisung benötigen, von einem an das Wechselspannungsnetz angeschlossenen Netzteil 21. Dieses liefert neben der Betriebsspannung UB für die vorgenannten Komponenten auch noch die erwähnten Referenzspannung UR1 und UR2.

Die vorstehend beschriebene Vorrichtung funktioniert auf folgende Weise:

In den Sekundärkreisen der beiden Ringkernwandler tritt, bei eingeschalteter Leuchtröhrenanlage, im Normalfall ein mit dem Strom in den Hochspannungsleitungen 2 und 3 korrelierter Sekundärstrom auf. Dieser enthält neben einer netzfrequenten Grundkomponete noch hochfrequente Anteile, welche im wesentlichen durch Störungen und Einstreuungen herrühren, welche zum grössten Teil von den Leuchtröhren ausgehen. In den Tiefpassfiltern 8 und 9 wird ein Teil der für die nachfolgende Auswertung störenden hochfrequenten Anteile herausgefiltert. Die beiden Operationsverstärker dienen dann zur Verstärkung der insbesondere nach der Filterung nur noch relativ schwachen Stromsignale und zur Umwandlung in Spannungssignale.

Durch die Komparatoren 14 und 15 wird nachfolgend überwacht, ob die mittels der Gleichrichter 12 und 13 gleichgerichteten Ausgangssignale der Operationsverstärker 10 und 11 einen durch die Referenzspannung UR1 vorgegebenen Wert nicht unterschreiten. Ist dies der Fall, signalisieren sie der Logik 19 das Vorliegen eines Leerlaufes der Sekundärseite des Hochspannungstransformators der Leuchtröhrenanlage.

Der durch die Referenzspannung UR1 bestimmte Referenzwert muss in geeigneter Relation zum Nennstrom in den Hochspannungsleitungen 2,3 bemessen sein. Dieser ist genormt und beträgt, wie eingangs bereits erwähnt, für die kleinsten gebräuchlichen Anlagen 18 mA und für die grössten 100 mA. Der genannte Referenzwert wird vorzugsweise so gewählt, dass die erfindungsgemässe Vorrichtung ohne besondere Anpassung für sämtliche Anlagen mit Nennströmen im vorstehend angegebenen Bereich verwendbar ist. Er wird deshalb vorzugsweise so eingestellt, dass ein Leerlauf immer dann detektiert wird, wenn der Strom in den Hochspannungsleitungen 2,3 etwa 50% des kleinsten gebräuchlichen Nennstromes, bei 18 mA also etwa 9 mA, unterschreitet.

Die Komparatoren 16 und 17 überwachen die gleichgerichteten Ausgangsspannungen der Operationsverstärker 10 und 11 auf Abweichung voneinander. Überschreitet diese ein bestimmtes, durch die Referenzspannung UR2 bestimmtes Mass, signalisieren sie der Logik 19 einen Erdschluss. Für die Wahl der Referenzspannung UR2 gelten im wesentlichen die gleichen Überlegungen wie für die Wahl der Referenzspannung UR1. Ein Erdschluss sollte immer dann angenommen werden, wenn die Ströme in den Hochspannungsleitungen 2,3 um mehr als etwa 50% des kleinsten gebräuchlichen Nennstromes voneinander (in der einen oder anderen Richtung) abweichen.

Durch die Überwachung der Abweichung der Ströme in den Hochspannungsleitungen 2,3 voneinander wird gleichzeitig auch der grösste Teil aller Kurzschlüsse, nämlich alle Kurzschlüsse mit unsymmetrischen Strömen in den Hochsapnnungsleitungen 2,3, mit erfasst.

Um auch symmetrische Kurzschlüsse erkennen zu können, sind parallel zum Gleichrichter 12 noch ein weiterer Gleichrichter 22 und ein Kondensator 23 in Serie geschaltet. Der Gleichrichter 22 weist eine kleinere Zeitkonstante bzw. Verzögerungszeit auf als der Gleichrichter 12.

Im Normalfall erzeugt der zusätzliche Gleichrichters 22, wie auch der Gleichrichter 12, eine Gleichspannung. Durch den Kondensator 23 bleibt diese ohne Auswirkung auf die Eingänge der Komparatoren 16 und 17. Bei Auftreten eines Kurzschlusses steigt die Stromstärke in den beiden Hochspannungsleitungen 2 und 3 jedoch sprunghaft an und damit auch die von den Operationsverstärker 10 und 11 ausgangsseitig abgegebene Spannung. Bedingt durch die kleinere Zeitkonstante des zusätzlichen Gleichrichters 22 gegenüber der Zeitkonstante des Gleichrichters 12 ergibt sich am Ausgang des erstgenannten Gleichrichters früher ein Spannungsanstieg als am Ausgang des letztgenannten. Der Spannungsanstieg am Ausgang des Gleichrichters 22 erreicht über den Kondensator 23 die Eingänge der Komparatoren entsprechend früher als der an sich gleichartige Spannungsanstieg am Ausgang des Gleichrichters 12. Es resultiert eine Unsymmetrie an den Eingängen der Komparatoren 16 und 17, was zur Erzeugung eines Fehlersignals für die Logik 19 wie im Erdschlussfall führt.

Indem die Logik 19 die ihr zugeführten Fehlersignale im wesentlichen gemäss einer Oder-Verknüpfung zum Ausschaltsignal für das Relais 5 miteinander verknüpft, wird der Hochspannungstransformator 1 in allen vorbeschriebenen Fehlerfällen von dem ihn speisenden Netz getrennt.

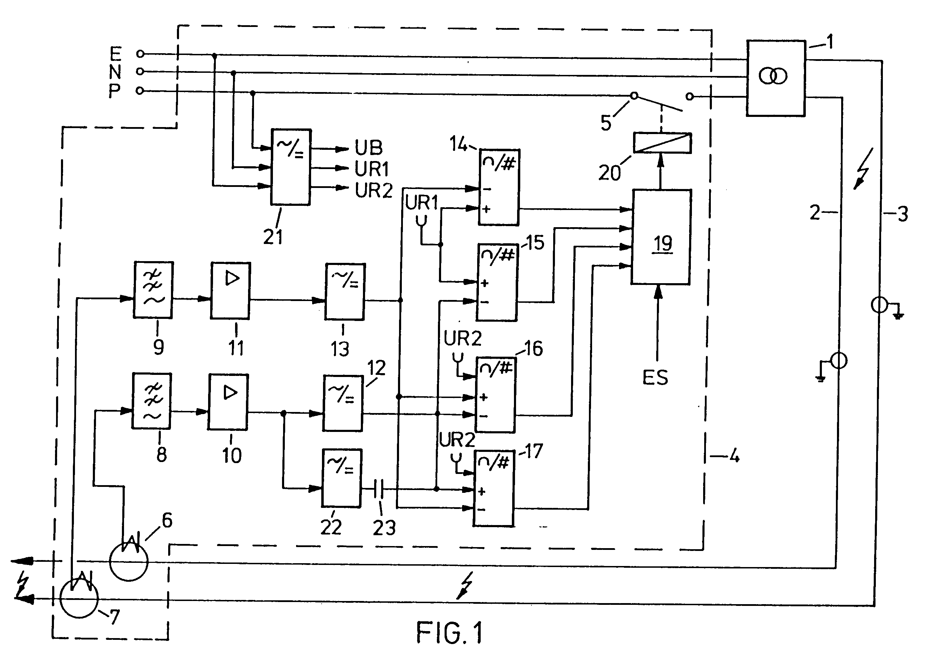

Grundsätzlich können die Komparatoren 14 und 15 nicht zwischen einem fehlerbedingten Leerlauffall und dem Fall der ordnungsgemäss abgeschalteten Anlage unterscheiden. In beiden Fällen fliesst in den Hochspannungsleitungen 2, 3 kein Strom. Um die Einschaltbarkeit der Anlage im störungsfreien Fall oder die Wiedereinschaltbarkeit der Anlage nach einer Fehlerabschaltung zu ermöglichen, müssen daher noch (in Fig. 1 nicht dargestellte) Mittel vorgesehen sein, die von den Komparatoren 14 oder 15 erzeugten logischen Signale zumindest vorübergehend für eine vorgegebene Zeit ausser Einfluss auf den Schaltzustand des Relais 20 bzw. des Schalters 5 zu setzen. Die genannten Mittel können als funktioneller Teil der Logik 19 angesehen werden. Zu ihrer Ansteuerung kann die Logik 19 beispielsweise noch mit einem Eingang zur Eingabe eines Einschaltsignals ES versehen sein. Die genannte Zeit sollte mindestens entsprechend der Einschwingzeit der in den Hochspannungsleitungen 2, 3 im fehlerfreien Fall fliessenden Ströme bemessen sein. Sie darf jedoch auch nicht zu lang bemessen sein im Hinblick darauf, dass tatsächlich auch ein Leerlauffall vorliegen könnte. Ein Wert von etwa 5 sec ist beispielsweise recht gut geeignet.

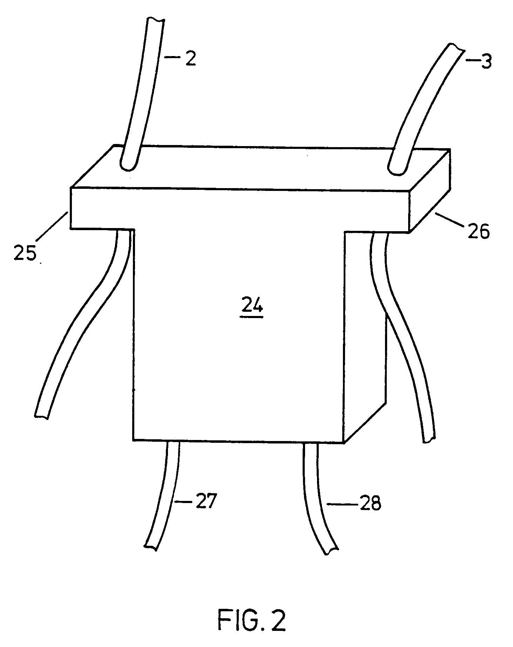

Fig. 2 zeigt ein Gehäuse 24 für die vorstehend beschriebene Vorrichtung bzw. für alle in Fig. 1 innerhalb des durch die unterbrochene Linie umgrenzten Bereichs angeordneten Vorrichtungskomponenten. Die beiden Ringkernwandler sind in den beiden oben am Gehäuse 24 vorstehenden Gehäuseteilen 25 und 26 angeordnet, durch welche die beiden Hochspannungsleitungen 2, 3 einfach durchgesteckt sind. Unten am Gehäuse sind zwei (jeweils dreiadrige) Netzkabel dargestellt, wobei das Kabel 27 zum Netzanschluss und das Kabel 28 zum Hochspannungstransformator führt. Das Gehäuse 24 wird vorzugsweise mehr oder weniger direkt am Hochspannungstransformator montiert.

## Patentansprüche

1. Vorrichtung zum Schutz einer Leuchtröhrenanlage mit einem primärseitig vom Netz (E,N,P) gespeisten Hochspannungstransformator (1) mit einer mitten-geerdeten Hochspannungswicklung und mit vom Hochspannungstransformator zu den Leuchtröhren führenden isolierten sowie ggf. zusätzlich noch abgeschirmten Hochspannungsleitungen (2,3), bei welcher zur Fehlerdetektion von den Strömen in den genannten Hochspannungsleitungen abgeleitete Strom- oder Spannungssignale ausgewertet werden, dadurch gekennzeichnet, dass zur Ableitung der genannten Signale Ringkernwandler (6,7) vorgesehen sind, durch deren Kerne die genannten Hochspannungsleitungen samt ihrer Isolierung und ggf. Abschirmung als Primärwicklung einzeln geführt sind.

2. Vorrichtung nach Anspruch 1, dadurch gekennzeichnet, dass die Sekundärwicklungen der Ringkernwandler jeweils über Filterschaltungen (8,9), vorzugsweise Tiefpassfilter, auf die Eingänge von Operationsverstärkern (10,11) geschaltet sind, dass den Operationsverstärkern erste Gleichrichter (12,13) und diesen wiederum Komparatoren (14 - 17) nachgeschaltet sind, dass die Komparatoren einerseits die Ausgangsspannungen der Gleichrichter auf Unterschreitung mindestens einer ersten vorgegebenen Referenzspannung (UR1) und andererseits die Differenz dieser Ausgangsspannungen auf Überschreitung mindestens einer zweiten vorgegebenen Referenzspannung (UR2) überwachen und bei Unter- bzw. Überschreitung dieser Referenzspannungen ein logisches Signal erzeugen, und dass ein Relais (20) vorgesehen ist, welches in Abhängigkeit der von den Komparatoren erzeugten logischen Signale den Hochspannungstransformator von dem ihn speisenden Netz trennt.

3. Vorrichtung nach Anspruch 2, dadurch gekennzeichnet, dass im Sekundärkreis eines der beiden Ringkernwandler parallel zu dem ersten Gleichrichter (12) ein zweiter Gleichrichter (22) mit einer in Bezug auf den ersten Gleichrichter kleineren Zeitkonstante sowie ein Kondensator (23) angeordnet ist.

4. Vorrichtung nach Anspruch 2 oder 3, dadurch gekennzeichnet, dass Mittel vorgesehen sind, welche ein Einschalten der Anlage selbst dann für eine vorgebbare Zeitspanne erlauben, wenn auf Grund der von den Komparatoren, insbesondere denjenigen Komparatoren, welche die Ausgangsspannungen der Gleichrichter auf Unterschreitung mindestens einer ersten vorgegebenen Referenzspannung überwachen, erzeugten logischen Signale der Hochspannungstransformator von dem ihn speisenden Netz getrennt ist.

5. Vorrichtung nach einem der Ansprüche 1 bis 4, dadurch gekennzeichnet, dass sämtliche elektrischen bzw. elektronischen Vorrichtungselemente, vorzugsweise einschliesslich der Ringkernwandler, in bzw. an einem einzigen kompakten Gehäuse (24) angeordnet sind.

6. Vorrichtung nach Anspruch 5 dadurch gekennzeichnet, dass auch das Netzkabel (27,28) des Hochspannungstransformators durch das genannte Gehäuse durchgeführt und dort auf ein Netzteil (21) für die übrigen im Gehäuse enthaltenen elektrischen bzw. elektronischen Vorrichtungselemente geschaltet ist.

## Claims

1. Apparatus for the protection of a fluorescent tube installation with a high voltage transformer (1) supplied on the primary side from the mains (E,N,P) and having a centre-earthed high voltage winding and with insulated and optionally also shielded high voltage lines (2,3) leading from the high voltage transformer to the fluorescent tubes, in which for fault detection purposes current or voltage signals derived from the currents in said high voltage lines are evaluated, characterized in that for deriving the said signals toroidal transformers (6,7) are provided, through whose cores are individually guided the said high voltage lines, together with their insulation and optionally shielding as a primary winding.

2. Apparatus according to claim 1, characterized in that the secondary windings of the toroidal transformers are in each case connected across filter circuits (8,9), preferably low-pass filters, to the inputs of operational amplifiers (10,11), that the operational amplifiers are followed by first rectifiers (12,13), which are in turn followed by comparators (14-17), that on the one hand the comparators monitor the output voltages of the rectifiers for dropping below at least a first given reference voltage (UR1) and on the other the difference of said output voltages for exceeding at least one second given reference voltage (UR2) and the passing below or above of said reference voltages generates a logic signal, and that a relay (20) is provided which, as a function of the logic signals generated by the comparators, separates the high voltage transformer from the mains supplying it.

3. Apparatus according to claim 2, characterized in that in the secondary circuit of one of the two toroidal transformers and parallel to the first rectifier (12) is provided a second rectifier (22) with a smaller time constant than the first rectifier, as well as a capacitor (23).

4. Apparatus according to claim 2 or 3, characterized in that means are provided which permit a connecting in of the installation for a predeterminable time interval even if the logic signals generated by the comparators, particularly those comparators which monitor the output voltages of the rectifier with respect to dropping below at least one first given reference voltage, the high voltage transformer is separated from the mains supplying it.

5. Apparatus according to one of the claims 1 to 4, characterized in that all the electronic or electrical apparatus elements, preferably including the toroidal transformers are arranged in or on a single compact casing (24).

6. Apparatus according to claim 5, characterized in that also the power cable (27,28) of the high voltage transformer is passed through said casing and is connected there to a mains part (21) for the remaining electrical or electronic apparatus elements contained in the casing.

## Revendications

1. Dispositif de protection d'une installation de lampes tubulaires, avec un transformateur haute tension (1) alimenté par secteur côté primaire (E, N, P) présentant un bobinage haute tension mis centralement à la terre et avec des lignes haute tension (2, 3) isolées et, le cas échéant, blindées en supplément, menant du transformateur haute tension aux lampes tubulaires, où des signaux de tension ou de courant dérivés des courants dans les lignes haute tension susmentionnées pour détecter les erreurs de courants, caractérisé par le fait que, pour dériver les signaux susmentionnés, des convertisseurs à tores magnétiques (6, 7) sont prévus, les lignes haute tension susmentionnées avec leur isolement et, le cas échéant, leur blindage, étant amenées séparément comme bobinage primaire à travers les tores de ces convertisseurs.

2. Dispositif selon revendication 1, caractérisé par le fait que les bobinages secondaires des convertisseurs à tores magnétiques sont commutés chacun via des commutations filtre (8, 9), de préférence des filtres passe-bas, sur les entrées des amplificateurs d'opération (10, 11), que des premiers redresseurs (12, 13) sont placés à la suite des amplificateurs d'opération, et que des comparateurs (14 - 17) sont placés à la suite des redresseurs, que les comparateurs contrôlent d'une part si les tensions de sortie des redresseurs n'atteignent pas au moins une première tension de référence prescrite (UR1) et d'autre part si la différence de ces tensions de sortie dépasse au moins une deuxième tension de référence (UR2) prescrite et, si ces tensions de référence ne sont pas atteintes ou, dans le deuxième cas, sont dépassées, génèrent un signal logique, et qu'il est prévu un relais (20) séparant, selon les signaux logiques générés par les comparateurs, le transformateur haute tension du secteur qui l'alimente.

3. Dispositif selon revendication 2, caractérisé par le fait que, dans le circuit secondaire d'un des deux convertisseurs à tores magnétiques, parallèlement au premier redresseur (12), il est agencé un deuxième redresseur (22) avec une constante de temps plus petite que celle du premier redresseur, ainsi qu'un condensateur (23).

4. Dispositif selon revendication 2 ou 3, caractérisé par le fait que des moyens sont prévus pour permettre de mettre l'installation en circuit pendant une période pouvant être programmée, même lorsque, en raison des signaux logiques générés par les comparateurs, notamment par les comparateurs contrôlant si les tensions de sortie des redresseurs n'atteignent pas au moins une première tension de référence prescrite, le transformateur haute tension est séparé du secteur qui l'alimente.

5. Dispositif selon l'une des revendications 1 à 4, caractérisé par le fait que la totalité des éléments électriques ou électroniques du dispositif, de préférence avec les convertisseurs à tores magnétiques, est agencée dans ou sur un seul boîtier compact (24).

6. Dispositif selon revendication 5, caractérisé par le fait que le cordon d'alimentation (27, 28) du transformateur haute tension passe à travers le boîtier susmentionné et qu'il y est commuté sur un bloc d'alimentation (21) pour les autres éléments électriques ou électroniques du dispositif contenus dans le boîtier.
